# EUROPÄISCHE PATENTSCHRIFT

(11) **EP 1 439 082 B1**
(45) Veröffentlichungstag und Bekanntmachung des Hinweises auf die Patenterteilung: **28.11.2007**
(21) Anmeldenummer: 04000893.0
(22) Anmeldetag: 16.01.2004
(51) Int. Cl.: B60H 1/00

(54) **Einrichtung zum Konditionieren eines Fahrzeugs**
Apparatus for conditioning a vehicle
Dispositif de conditionnement d'un véhicule

(30) Priorität: 17.01.2003 DE 10301667
(43) Veröffentlichungstag der Anmeldung: 21.07.2004
(73) Patentinhaber: J. Eberspächer GmbH & Co. KG, 73730 Esslingen (DE)
(72) Erfinder: Eberspach, Günter, 72649 Wolfschlugen (DE); Gaiser, Gerd, 72768 Reutlingen (DE); Lindl, Bruno, 76327 Pfinztal (DE); Blaschke, Walter, 73779 Deizisau (DE); Kaupert, Andreas, 89073 Ulm (DE)
(74) Vertreter: Ruttensperger, Bernhard

(56) Entgegenhaltungen:
- EP-A- 1 057 668
- EP-A- 1 241 723
- DE-A1- 10 139 617

## Beschreibung

Die vorliegende Erfindung betrifft eine Einrichtung zum Konditionieren eines Fahrzeugs gemäß dem Oberbegriff des Anspruchs 1.

Moderne Kraftfahrzeuge werden zunehmend mit Systemen ausgestattet, die dazu dienen, beispielsweise vor Fahrtantritt das Fahrzeug zu konditionieren, d. h. in einen von einem Fahrer gewünschten Zustand zu bringen, beispielsweise zu erwärmen, oder verschiedene Systembereiche vorzubereiten, so dass beispielsweise beim Starten einer als Antriebsaggregat dienenden Brennkraftmaschine auch in der Startphase die Schadstoffemission so gering als möglich ist.

Es ist bekannt, zum Konditionieren von Fahrzeugen brennstoffbetriebene Heizgeräte als Standheizung einzusetzen, ebenso wie elektrisch betriebene Systeme, wie Sitzheizung und dergleichen. Die elektrisch betriebenen Systeme belasten insbesondere bei vergleichsweise niedrigen Temperaturen die in einem Kraftfahrzeug allgemein vorgesehenen Batterien sehr stark, so dass hier zunehmend das Betreben vorhanden ist, Brennstoffzellen in ein Fahrzeug zu integrieren, um auf diese Art und Weise auch in einem Zustand, in welchem ein Antriebsaggregat noch nicht zur Erzeugung elektrischer Energie genutzt werden kann, oder in einem Zustand, in welchem auch bei betriebenem Antriebsaggregat dieses nur vergleichsweise schlecht zur Gewinnung elektrischer Energie beitragen kann, diese Verbraucher ausreichend zu versorgen.

Eine Einrichtung gemäß dem Oberbegriff des Anspruchs 1 ist aus der DE 101 39 617 A1 bekannt. Bei diesem bekannten System ist der Brennstoffzelle ein Brenner nachgeschaltet. Die in diesem Brenner erzeugte Wärme und beispielsweise auch die in anderen Systembereichen des Brennstoffzellensystems erzeugte Wärme kann dazu genutzt werden, die verschiedenen in das Brennstoffzellensystem bzw. in den Reformer desselben einzuleitenden Medien vorzuwärmen.

Die EP 1 057 668 A2 offenbart ein System, bei welchem die in einer Brennstoffzelle generierte Wärme in einem Kühlkreislauf aufgenommenen und somit auf die in einen Fahrzeuginnenraum einzuleitende Luft übertragen werden kann.

Die EP 1 241 723 A1 offenbart ein Brennstoffzellensystem, bei welchem die in einer Brennstoffzelle bei Erzeugung elektrischer Energie anfallende Wärme in einem Abfallwärmerückgewinnungssystem aufgenommen und in anderen Systembereichen genutzt werden kann.

Ziel der vorliegenden Erfindung ist es, die in einem Fahrzeug vorgesehenen und zum Konditionieren desselben beitragenden Systemkomponenten effizienter zu nutzen.

Gemäß einem ersten Aspekt der vorliegenden Erfindung wird diese Aufgabe gelöst durch eine Einrichtung zum Konditionieren eines Fahrzeugs, wie sie im Anspruch 1 definiert ist. Diese umfasst wenigstens eine elektrisch betriebene Konditionieranordnung, ein Warmluftversorgungssystem mit einer Wärmequelle und einer Förderanordnung zum Fördern von erwärmter Luft in einem Fahrzeuginnenraum, ein Brennstoffzellensystem zum Bereitstellen elektrischer Energie für die wenigstens eine Konditionieranordnung oder/und die Förderanordnung, wobei das Warmluftversorgungssystem das Brennstoffzellensystem als Wärmequelle sowie ferner eine Wärmetauscheranordnung umfasst zum Übertragen von im Bereich des Brennstoffzellensystems anfallender Wärme auf die in den Fahrzeuginnenraum zu fördernde Luft. Das Brennstoffzellensystem umfasst eine Reformeranordnung zur Erzeugung eines wasserstoffhaltigen Reformats sowie eine Brennstoffzelle. Da es praktisch nicht möglich ist, den gesamten in eine Brennstoffzelle eingespeisten Wasserstoff zur Gewinnung elektrischer Energie einzusetzen, enthält das die Brennstoffzelle verlassende Gasgemisch nach einem gewissen Anteil an Restwasserstoff. Daher umfasst das Brennstoffzellensystem ferner einen Brenner zum Verbrennen von die Brennstoffzelle verlassenden Restwasserstoff mit Luft. Durch die Wärmetauscheranordnung ist im Bereich der Reformeranordnung anfallende Wärme oder/und im Bereich des Brenners anfallende Wärme auf die in den Fahrzeuginnenraum zu fördernde Luft übertragbar. Da auch das Brennstoffzellensystem in sich verschiedene Bereiche umfasst, in welchen bei Betrieb des Systems Wärme anfällt, wird dadurch eine äußerst effiziente Ausnutzung der an sich als Abwärme anfallenden Energie ermöglicht.

Wesentlich bei diesem Erfindungsaspekt ist, dass das an sich zur Bereitstellung ausreichend elektrischer Energie dienende Brennstoffzellensystem gleichzeitig auch die Quelle der Wärmeenergie darstellt, die erforderlich ist, um erwärmte Luft in den Fahrzeuginnenraum, also beispielsweise einen Fahrgastraum oder ggf. auch einen Laderaum, einspeisen zu können. Das Bereitstellen eines zusätzlichen, brennstoffbetriebenen Heizgeräts, wie es im Stand der Technik allgemein üblich ist, ist dann nicht erforderlich.

Beispielsweise kann vorgesehen sein, dass die Konditionieranordnung umfasst: eine Sitzheizeinrichtung oder/und eine Fensterscheibenheizeinrichtung oder/und eine Außenspiegelheizeinrichtung oder/und eine Lenkradheizeinrichtung.

All diese Einrichtungen tragen dazu bei, einerseits den Komfort zu erhöhen, andererseits jedoch auch die Sicherheit zu erhöhen, indem auch bei vergleichsweise niedrigen Außentemperaturen bei Fahrtantritt alle Scheiben und ggf. auch Außenspiegel abgetaut sind.

Insbesondere dann, wenn die Brennstoffzelle als so genannte PEM-Brennstoffzelle ausgebildet ist, ist es vorteilhaft oder erforderlich, das die Reformeranordnung verlassende wasserhaltige Reformat vorzureinigen. Es wird daher vorgeschlagen, dass das Brennstoffzellensystem zwischen der Reformeranordnung und der Brennstoffzelle eine Reformatreinigungsstufe umfasst und dass durch die Wärmetauscheranordnung im Bereich der Reformatreinigungsstufe anfallende Wärme auf die in den Fahrzeuginnenraum zu fördernde Luft übertragbar ist. Auf diese Art und Weise kann ein weiterer Beitrag zur verbesserten Ausnutzung der im Fahrzeug anfallenden Wärme geliefert werden. Auch die im Bereich der Brennstoffzelle anfallende Wärme kann auf die in den Fahrzeugraum zu fördernde Luft übertragbar sein.

Ferner kann vorgesehen sein, dass durch die Wärmetauscheranordnung im Bereich des Brennstoffzellensystems anfallende Wärme auf wenigstens einen zu erwärmenden Systembereich des Fahrzeugs übertragbar ist.

Man erkennt also, dass das Konditionieren eines Fahrzeugs nicht nur das Erhöhen des Komforts oder der Sicherheit umfasst, sondern auch das Vorbereiten bzw. Vorerwärmen verschiedener Betriebssysteme des Fahrzeugs umfasst, wie z. B. ein Abgasnachbehandlungssystem bzw. ein Antriebsaggregat. Auf diese Art und Weise kann durch die im Brennstoffzellensystem anfallende Abwärme durch entsprechende Vorerwärmung bzw. Konditionierung dieser Systembereiche sichergestellt werden, dass beispielsweise das Antriebsaggregat beim Start durch die bereits erfolgte Vorerwärmung bereits weniger Schadstofffe ausstößt, und dass bei entsprechender Vorerwärmung des Abgasnachbehandlungssystems dieses auch in der Startphase bereits in der Lage ist, mit sehr hoher Effizienz die vom Antriebsaggregat ausgestoßenen Schadstoffe abzubauen.

Es ist selbstverständlich, dass dieser zweite Konditionierungsaspekt der vorliegenden Erfindung kombiniert werden kann mit dem erstgenannten Aspekt und dass selbstverständlich die vorangehend dargelegten Ausgestaltungsmöglichkeiten, insbesondere im Bereich des Brennstoffzellensystems, auch bei dem zweitgenannten Konditionierungsaspekt vorgesehen sein können.

Die vorliegende Erfindung wird nachfolgend mit Bezug auf die beiliegenden Zeichnungen detailliert beschrieben. Es zeigt:
- Fig. 1: eine Prinzipansicht eines Kraftfahrzeugs;
- Fig. 2: eine blockbildartige Darstellung eines Brennstoffzellensystems de PEM-Typs;
- Fig. 3: eine der Fig. 2 entsprechende Darstellung eines Brennstoffzellensystems des SOFC-Typs.

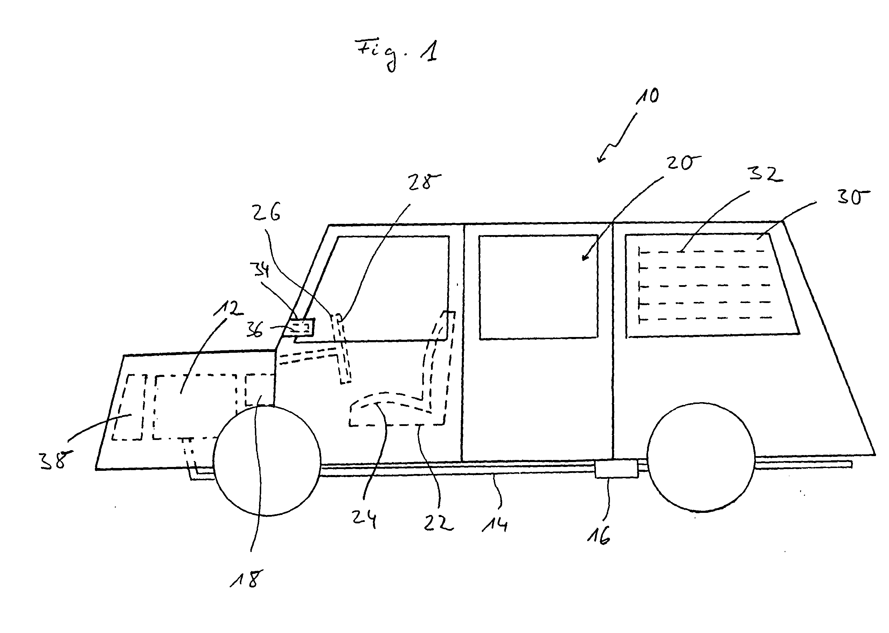

In Fig. 1 ist ein Kraftfahrzeug 10 dargestellt, welches gemäß dem Prinzip in der vorliegenden Erfindung konditioniert werden kann.

Das Kraftfahrzeug 10 weist eine Brennkraftmaschine 12 als Antriebsaggregat auf. Die in der Brennkraftmaschine 12 erzeugten Abgase werden über ein Abgasführungssystem 14 und ein Abgasnachbehandlungssystem 16 nach außen abgegeben. Es ist ferner ein Gebläse 18 vorgesehen, durch welches Luft in den Innenraum 20 des Kraftfahrzeugs 10 eingeleitet werden kann. Die Luft kann, wie im Folgenden beschrieben, vorerwärmt sein, was im normalen Fahrzustand beispielsweise unter Einsatz der von der Brennkraftmaschine 12 erzeugten Wärme folgen kann. Im Innenraum 20 des Kraftfahrzeugs 10 sind mehrere Sitze oder Sitzbänke 22 vorgesehen, von welchen beispielhaft nur der Fahrersitz gezeigt ist. Der Fahrersitz 22 weist, ebenso wie ggf. andere Sitze, eine elektrisch betreibbare Sitzheizung 24 auf. Ferner ist ein Lenkrad 26 vorgesehen, welchem eine ebenfalls elektrisch betreibbare Lenkradheizung 28 zugeordnet ist.

Verschiedene der Fensterscheiben 30 des Kraftfahrzeugs 10 können mit einer elektrisch betreibbaren Scheibenheizung 32 ausgestattet sein, wobei vorzugsweise zumindest die Heckscheibe und die Frontscheibe mit einer derartigen Heizung versehen sind. Auch der oder die Außenspiegel 34 können mit einer elektrisch betreibbaren Spiegelheizung 36 versehen sein.

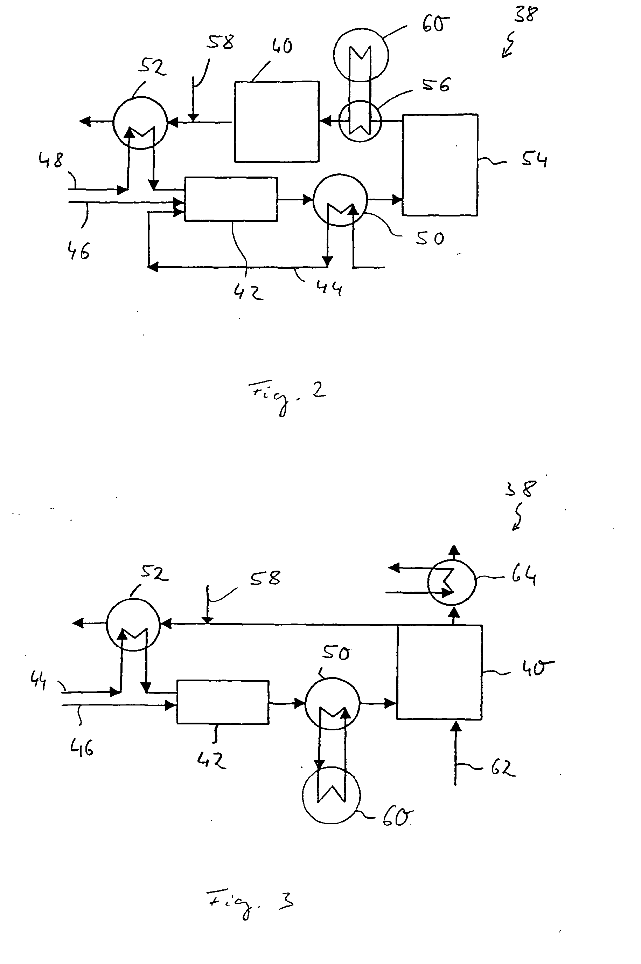

Um in allen Betriebszuständen sicherstellen zu können, dass ausreichend elektrische Energie für alle elektrisch betreibbaren Systeme des Kraftfahrzeugs 10 zur Verfügung gestellt werden kann, weist das Kraftfahrzeug 10 ein nur schematisch dargestelltes Brennstoffzellensystem 38 auf, das nachfolgend mit Bezug auf die Fig. 2 und 3 noch detaillierter erläutert wird. Dieses Brennstoffzellensystem stellt sicher, dass insbesondere auch in Betriebszuständen, in welchen die Brennkraftmaschine 12 nicht oder nicht zusätzlich zur Erzeugung elektrischer Energie genutzt werden kann, ausreichend elektrische Energie vorhanden ist. Es wird somit möglich, das Kraftfahrzeug 10 vor Fahrtantritt und auch vor dem Inbetriebnehmen der Brennkraftmaschine 12 thermisch vorzubereiten, also beispielsweise durch Erregen der verschieden vorangehend beschriebenen elektrisch betreibbaren Heizungen 24, 28, 32, 36 und ggf. auch einer elektrischen Heizung des Abgasnachbehandlungssystems 16, das Fahrzeug in einen Zustand zu bringen, in dem von Anbeginn des Fahrtantritts vor allem bei vergleichsweise niedrigen Außentemperaturen ein angenehmens Klima für den Fahrer herrscht, andererseits jedoch verschiedene im Betrieb wirksame Systeme bereits in einem Betriebszustand sind, in welchem sie nahezu optimal arbeiten können. Auch das Gebläse 18 kann über das Bordnetz und somit durch von dem Brennstoffzellensystem 38 gelieferte elektrische Energie betrieben werden.

Gemäß den Prinzipien der vorliegenden Erfindung wird jedoch nicht nur die von dem Brennstoffzellensystem 38 gelieferte elektrische Energie genutzt, sondern auch die im Brennstoffzellensystem 38 bei Erzeugung elektrischer Energie anfallende Wärme. Diese Wärme kann unter Einsatz verschiedener Wärmetauscher auf die in den Fahrzeuginnenraum 20 einzuleitende Luft übertragen werden, welche dann durch das Gebläse 18 in den Fahrzeuginnenraum 20 geleitet wird. Somit wird die insbesondere im Bereich des Brennstoffzellensystems 18 bereitgestellte Energie, also nicht nur die elektrische Energie, sondern auch die Wärmeenergie, in optimaler Weise ausgenutzt, um das Fahrzeug 10 vorzubereiten bzw. zusätzlich zu heizen. Dabei kann die Wärme, die im Brennstoffzellensystem 38 bei der Erzeugung elektrischer Energie anfällt, nicht nur zur Erwärmung des Fahrzeuginnenraums 20 genutzt werden, sondern kann beispielsweise auch zur Vorerwärmung der Brennkraftmaschine 12 und des Abgasführungssystems 14, insbesondere des Abgasnachbehandlungssystems 16, eingesetzt werden. Somit kann vor allem am Beginn des Betriebs der Brennkraftmaschine 1 2 bei vergleichsweise niedrigen Außentemperaturen der Schadstoffausstoß desselben verringert werden. Das Brennstoffzellensystem kann dabei jedoch nicht nur im Standzustand und bei vergleichsweise niedrigen Außentemperaturen auch hinsichtlich der dort erzeugten Wärme genutzt werden, sondern kann beispielsweise dann, wenn die Brennkraftmaschine 12 ein Dieselaggregat ist, als so genannter Zuheizer betrieben werden, der auch während des Fahrbetriebs aktiv ist.

Beispiele für Brennstoffzellensysteme, die bei dem in der Fig. 1 gezeigten Kraftfahrzeug 10 zum Einsatz kommen können, sind in den Fig. 2 und 3 dargestellt. Das in der Fig. 2 gezeigte Brennstoffzellensystem ist von dem so genannten PEM-Typ, bei welchem eine Brennstoffzelle 40 dieses Brennstoffzellensystems 38 bei der vergleichsweise niedrigen Temperatur im Bereich von 80°C arbeitet. Neben der Brennstoffzelle 40 umfasst das Brennstoffzellensystem 38 einen Reformer 42, in welchen Luft 44, Kraftstoff 46 und Wasser 48 eingegeben werden. Die Luft 44 und das Wasser 48 können in Wärmetauschern 50, 52 vorerwärmt werden, so dass sie bei der gemeinsamen Einleitung mit dem Brennstoff 46 im Reformer 42 schneller verdampft und zu einem wasserstoffhaltigen Reformat umgesetzt werden. Dieses wasserstoffhaltige Reformat verlässt den Reformer 42 und wird im Wärmetauscher 50 gekühlt, wobei es seine Wärme oder einen Teil seiner Wärme auf die Luft 44 überträgt. Das Reformat strömt nach dem Wärmetauscher 50 in eine Gasreinigungsstufe 54, die ebenfalls bei sehr hoher Temperatur arbeitet. Das die Gasreinigungsstufe 54 verlassende wasserstoffhaltige Gas durchströmt einen weiteren Wärmetauscher 56, bevor es mit der geeigneten Temperatur in die Brennstoffzelle 40 eintritt. In der Brennstoffzelle 40 wird der Wasserstoff des wasserstoffhaltigen Gases mit Luftsauerstoff umgesetzt und dabei elektrische Energie erzeugt. Das die Brennstoffzelle 40 verlassende Gas enthält immer noch einen Restanteil von Wasserstoff, der mit weiterer Luft 58 verbrannt wird. Die bei dieser Verbrennung erzeugte Wärme wird in dem Wärmetauscher 52 wenigstens zum Teil auf das in den Reformer 42 einzuleitende Wasser übertragen.

Vor allem die im Wärmetauscher 56 dem wasserstoffhaltigen Gas entzogene Wärme kann beispielsweise in einem weiteren Wärmetauscher 60 auf die in den Fahrzeuginnenraum 20 unter Wirkung des Gebläses 18 zu fördernde Luft übertragen werden. Ferner kann in dem Wärmetauscher 60 oder einem weiteren Wärmetauscher Wärme, die in diesem Brennstoffzellensystem 38 anfällt, auf das Kühlmittel der Brennkraftmaschine 12 übertragen werden, so dass auch diese bereits vorerwärmt werden kann. Es ist weiterhin möglich, das den Wärmetauscher 52 verlassende Gas durch die Brennkraftmaschine und das Abgasführungssystem 14 hindurchzuleiten, um dabei diese Systemkomponenten vorzuwärmen. Selbstverständlich ist es auch möglich, die beiden Wärmetauscher 50, 52 dazu zu nutzen, Wärme auf andere Medien, wie z. B. die in den Fahrzeuginnenraum zu fördernde Luft zu übertragen.

Bei dem in Fig. 3 gezeigten Brennstoffzellensystem 38 handelt es sich um ein System des SOFC-Typs. Dabei arbeitet die Brennstoffzelle 40 mit einer Temperatur im Bereich von 650°C oder mehr. Dem Reformer 42 werden wieder Brennstoff 46 und Luft 44 zugeleitet, welche nunmehr in dem Wärmetauscher 52 vorerwärmt werden kann. Das den Reformer 42 verlassende Reformat, das eine vergleichsweise hohe Temperatur aufweist, durchströmt den Wärmetauscher 50, bevor es in die Brennstoffzelle 40 eintritt. Mit der ebenfalls in die Brennstoffzelle 40 eingeleiteten Luft 62 bzw. dem darin enthaltenen Luftsauerstoff reagiert der Wasserstoff unter Erzeugung elektrischer Energie. Die sauerstoffentreicherte Luft verlässt die Brennstoffzelle 40 über einen weiteren Wärmetauscher 64. Ferner verlässt das wasserstoffentreicherte Gas die Brennstoffzelle 40 in Richtung zum Wärmetauscher 52. Bevor es den Wärmetauscher 52 erreicht, wird jedoch wieder Luft zugesetzt und zusammen mit dem noch in diesem Gas enthaltenen Restsauerstoff zur Verbrennung gebracht, um die dabei entstehende Wärme im Wärmetauscher 52 noch nutzen zu können.

Man erkennt, dass auch bei dem Brennstoffzellensystem 38 der Fig. 3 insbesondere bei den Wärmetauschern 64, 50 und 52 die Möglichkeit besteht, die dort der sauerstoffentreicherten Luft bzw. dem Reformat entzogene Wärme auf andere Medien, wie z. B. die in den Fahrzeuginnenraum zu fördernde Luft oder das Kühlmedium der Brennkraftmaschine zu übertragen.

Auch bei dem in der Fig. 2 gezeigten System kann, ähnlich wie bei dem System der Fig. 3, die durch die Brennstoffzelle 40 geleitete Luft, welche die Brennstoffzelle 40 mit erhöhter Temperatur von beispielsweise mehr als 80°C verlässt, durch einen Wärmetauscher geleitet werden, wie dies beim Wärmetauscher 64 des Systems der Fig. 3 der Fall ist. Auch die in dieser Luft zunächst noch transportierte Wärme kann dann im Sinne der vorliegenden Erfindung weiter genutzt werden.

Um ein derartiges Brennstoffzellensystem auch in einem Zustand in Betrieb nehmen zu können, in welchem beispielsweise vor Fahrtantritt bei niedrigen Außentemperaturen im Bereich des Brennstoffzellensystems, insbesondere im Bereich des Reformers, der Gasreinigungsstufe und der Brennstoffzelle selbst, ausreichend hohe Betriebstemperaturen nicht vorhanden sind, ist es beispielsweise möglich, zunächst im Reformer das in diesen eingespeiste bzw. darin erzeugte Gemisch aus Verbrennungsluft und Brennstoff nach Art eines brennstoffbetriebenen Heizgeräts zu verbrennen, also zu zünden, so dass die den Reformer verlassenden sehr heißen Abgase beim Durchströmen des Reformers selbst und ggf. auch der Gasreinigungsstufe und der Brennstoffzelle zur Erwärmung dieser Komponenten beitragen.

Die beiden in den Fig. 2 und 3 gezeigten Brennstoffzellensysteme sind nur beispielhaft und sollen veranschaulichen, dass in verschiedenen Bereichen eines derartigen Brennstoffzellensystems aufgrund der in diesen Bereichen erforderlichen Arbeitstemperatur, die im Bereich von bis zu 900°C liegen kann, Wärme anfällt, die gemäß den Prinzipien der vorliegenden Erfindung zum Konditionieren des Kraftfahrzeugs 10, also beispielsweise zum Einleiten erwärmter Luft in den Fahrzeuginnenraum oder zum Vorwärmen bzw. Erwärmen verschiedener Systemkomponenten genutzt werden kann. Es ist selbstverständlich, dass auch anders ausgestaltete Brennstoffzellensysteme hier zum Einsatz gelangen können. Elementar ist jedoch bei der vorliegenden Erfindung, dass die Brennstoffzellensysteme nicht nur zur Erzeugung elektrischer Energie genutzt werden, sondern dass auch die dabei anfallende Wärme genutzt wird und nicht als Verlustwärme zur Umgebung hin abgegeben wird. Dabei ist vor allem auch die Erwärmung des Abgasnachbehandlungssystems 16, also beispielsweise des dort vorgesehenen Katalysators oder Partikelfilters, von elementarer Bedeutung für den verminderten Schadstoffausstoß am Beginn des Betriebs.

Abschließend sei noch darauf hingewiesen, dass im Sinne der vorliegenden Erfindung der Ausdruck "Fahrzeuginnenraum" nicht nur den Fahrer- oder Fahrgastraum bezeichnet, sondern auch jedweden anderen thermisch zu konditionierenden Fahrzeuginnenraum, wie z.B. einen Frachtraum oder dergleichen.

## Patentansprüche

1. Einrichtung zum Konditionieren eines Fahrzeugs, umfassend wenigstens eine elektrisch betriebene Konditionieranordnung (24, 28, 32, 36), ein Warmluftversorgungssystem mit einer Wärmequelle und einer Förderanordnung (18) zum Fördern von erwärmter Luft in einem Fahrzeuginnenraum (20), ein Brennstoffzellensystem (38) zum Bereitstellen elektrischer Energie für die wenigstens eine Konditionieranordnung (24, 28, 32, 36) oder/und die Förderanordnung (18),
wobei das Brennstoffzellensystem (38) eine Reformeranordnung (42) zur Erzeugung eines wasserstoffhaltigen Reformats, eine Brennstoffzelle (40) sowie einen Brenner zum Verbrennen von die Brennstoffzelle (40) verlassendem Restwasserstoff mit Luft umfasst, wobei das Brennstoffzellensystem (38) ferner eine Wärmetauscheranordnung (60) umfasst zum Übertragen von im Bereich des Brennstoffzellensystems (38) anfallender Wärme auf ein zu erwärmendes Medium,
**dadurch gekennzeichnet, dass** durch die Wärmetauscheranordnung (60) im Bereich der Reformeranordnung (42) anfallende Wärme oder/und im Bereich des Brenners anfallende Wärme auf die in den Fahrzeuginnenraum (20) zu fördernde Luft als zu erwärmendes Medium übertragbar ist.

2. Einrichtung nach Anspruch 1,
**dadurch gekennzeichnet, dass** die Konditionieranordnung (24, 28, 32, 36) umfasst:
- eine Sitzheizeinrichtung (24) oder/und
- eine Fensterscheibenheizeinrichtung (32) oder/und
- eine Außenspiegelheizeinrichtung (36) oder/und
- eine Lenkradheizeinrichtung (28).

3. Einrichtung nach Anspruch 1 oder 2,
**dadurch gekennzeichnet, dass** durch die Wärmetauscheranordnung (60) im Bereich der Brennstoffzelle (40) anfallende Wärme auf die in den Fahrzeuginnenraum (20) zu fördernde Luft übertragbar ist.

4. Einrichtung nach Anspruch 3,
**dadurch gekennzeichnet, dass** das Brennstoffzellensystem (38) zwischen der Reformeranordnung (42) und der Brennstoffzelle (40) eine Reformatreinigungsstufe (54) umfasst und dass durch die Wärmetauscheranordnung (60) im Bereich der Reformatreinigungsstufe (54) anfallende Wärme auf die in den Fahrzeuginnenraum (20) zu fördernde Luft übertragbar ist.

5. Einrichtung nach einem der vorangehenden Ansprüche,
**dadurch gekennzeichnet, dass** durch die Wärmetauscheranordnung (60) im Bereich des Brennstoffzellensystems (38) anfallende Wärme auf wenigstens einen zu erwärmenden Systembereich des Fahrzeugs (10) übertragbar ist.

6. Einrichtung nach Anspruch 5,
**dadurch gekennzeichnet, dass** der wenigstens eine zu erwärmende Systembereich des Fahrzeugs (10) umfasst:
- ein Abgasnachbehandlungssystem oder/und
- ein Antriebsaggregat.

## Claims

1. A device for conditioning a vehicle, comprising at least one electrically operated conditioning assembly (24,28,32,36), a hot air supply system with a heat source and a delivery assembly (18) for delivering heated air into a vehicle interior (20), a fuel cell system (38) for providing electrical energy for the at least one conditioning assembly (24,28,32,36) and/or the delivery assembly (18), wherein the fuel cell system (38) comprises a reformer assembly (42) for producing a hydrogen-containing reformate, a fuel cell (40) and a burner for the combustion with air of residual hydrogen leaving the fuel cell (40), wherein the fuel cell system (38) further comprises a heat exchanger assembly (60) for transferring heat arising in a vicinity of the fuel cell system (38) to a medium to be heated,
**characterised in that** heat arising in the vicinity of the reformer assembly (42) and/or in a vicinity of the burner can be transferred by the heat exchanger assembly (60) to the air to be delivered into the vehicle interior (20) as medium to be heated.

2. A device according to Claim 1, **characterised in that** the conditioning assembly (24,28,32,36) comprises:
- a seat heating device (24) and/or
- a window heating device (32) and/or
- an external mirror heating device (36) and/or
- a steering wheel heating device (28).

3. A device according to Claim 1 or 2, **characterised in that** heat arising in the vicinity of the fuel cell (40) can be transferred by the heat exchanger assembly (60) to the air to be delivered into the vehicle interior (20).

4. A device according to Claim 3, **characterised in that** the fuel cell system (38) comprises between the reformer assembly (42) and the fuel cell (40) a reformate purification stage (54), and **in that** heat arising in the vicinity of the reformate purification stage (54) can be transferred by the heat exchanger assembly (60) to the air to be delivered into the vehicle interior (20).

5. A device according to any one of the preceding Claims, **characterised in that** heat arising in the vicinity of the fuel cell system (38) can be transferred by the heat exchanger assembly (60) to at least one system zone of the vehicle (10) to be heated.

6. A device according to Claim 5, **characterised in that** the at least one system zone of the vehicle (10) to be heated comprises:
- an exhaust gas after-treatment system and/or a drive assembly.

## Revendications

1. Système de conditionnement d'un véhicule comprenant au moins un dispositif de conditionnement à commande électrique (24, 28, 32, 36), un système d'alimentation en air chaud avec une source de chaleur et un dispositif de refoulement (18) pour refouler l'air réchauffé dans un habitacle de véhicule automobile (20), un système de cellule de combustible (38) pour fournir de l'énergie électrique pour au moins un dispositif de conditionnement (24, 28, 32, 36) ou/et le dispositif de refoulement (18), moyennant quoi le système de cellule de combustible (38) comprend un dispositif reformeur (42) pour produire un réformat qui contient de l'hydrogène, une cellule de combustible (40) ainsi qu'un brûleur pour brûler l'hydrogène résiduel s'échappant de la cellule de combustible (40) avec de l'air, le système de cellule de combustible (38) comprenant de plus un dispositif d'échangeur thermique (60) pour transmettre de la chaleur produite dans la zone du système de cellule de combustible (38) à un milieu devant être réchauffé,
**caractérisé en ce que** la chaleur produite par le dispositif d'échangeur thermique (60) dans la zone du dispositif reformeur (42) ou/et dans la zone du brûleur peut être transmis à l'air devant être refoulé dans l'habitacle du véhicule automobile (20) en tant que milieu devant être réchauffé.

2. Système selon la revendication 1,
**caractérisé en ce que** le dispositif de conditionnement (24, 28, 32, 36) comprend:
- un système de chauffage des sièges (24) ou/et
- un système de chauffage des vitres (32) ou/et
- un système de chauffage des rétroviseurs extérieurs (36) ou/et
- un système de chauffage du volant (28).

3. Système selon la revendication 1 ou 2,
**caractérisé en ce que** de la chaleur produite par le dispositif d'échangeur thermique (60) dans la zone de la cellule de combustible (40) peut être transmis à l'air devant être refoulé dans l'habitacle du véhicule automobile (20).

4. Système selon la revendication 3,
**caractérisé en ce que** le système de cellule de combustible (38) comprend une étape de synthèse de réformat entre le dispositif reformeur (42) et la cellule de combustible (40) (54), et **en ce que** de la chaleur produite par le dispositif d'échangeur thermique (60) dans la zone de l'étape de synthèse de réformat (54) peut être transmis à l'air devant être refoulé dans l'habitacle du véhicule automobile (20).

5. Système selon une des revendications précédentes,
**caractérisé en ce que** de la chaleur produite par le dispositif d'échangeur thermique (60) dans la zone du système de cellule de combustible (38) peut être transmis à au moins une zone de système du véhicule automobile (10) devant être réchauffée.

6. Système selon la revendication 5,
**caractérisé en ce que** la au moins une zone de système du véhicule automobile (10) devant être réchauffée comprend :
- un système de retraitement des gaz d'échappement ou/et
- un propulseur.
